(19) Europäisches Patentamt
European Patent Office
Office européen des brevets

(11) **EP 2 335 950 A1**

(12) **EUROPEAN PATENT APPLICATION**
published in accordance with Art. 153(4) EPC

(43) Date of publication:
**22.06.2011 Bulletin 2011/25**

(51) Int Cl.:
*B60C 19/00* (2006.01)  *B60C 11/03* (2006.01)

(21) Application number: **09814582.4**

(22) Date of filing: **16.09.2009**

(86) International application number:
**PCT/JP2009/066130**

(87) International publication number:
**WO 2010/032737 (25.03.2010 Gazette 2010/12)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **18.09.2008 JP 2008239936**

(71) Applicant: **Bridgestone Corporation
Tokyo 104-8340 (JP)**

(72) Inventor: **SAKURABA, KAZUKI
187-8531 (JP)**

(74) Representative: **Oxley, Robin John George
Marks & Clerk LLP
90 Long Acre
London
WC2E 9RA (GB)**

(54) **METHOD OF DESIGNING TIRE AND TIRE**

(57)    A method of designing a tire designs a tire comprising a step 20 of determining a resonance sound frequency f being a reference frequency of an air column resonance sound produced by the tire, on the basis of a ground contact length of the tire in a case where a standard internal pressure and a standard load are applied to the tire, a step 30 of determining the number of pitches of the block row, and a step 40 of determining a block row phase in a case where a band of a secondary pitch noise frequency fp2 falls within a range overlapping with a band of the resonance sound frequency f, the block row phase defined by intervals at which the plurality of blocks forming the block row are placed, the secondary pitch noise frequency fp2 being a secondary component of a reference frequency of pitch noise arising from the block row at a reference speed being a reference traveling speed of a vehicle equipped with the tire. In the step 40, the block row phase is determined in such a manner that one part and the other part of the block row on both sides of a tire equator line are out of phase from each other by 10% to 30%.

FIG. 2

EP 2 335 950 A1

**Description**

TECHNICAL FIELD

The present invention relates to a method of designing a tire including a block row which has multiple blocks sectioned by circumferential grooves and lateral grooves, and which is formed along a tire circumferential direction. The invention also relates to the tire.

BACKGROUND ART

Noise occurring when a tire rolls on a road surface, or so-called tire noise, is caused mainly by an air column resonance sound or a pattern vibration sound (pitch noise), the air column resonance sound arising from air columns formed by the road surface and a circumferential groove, such as a main groove, extending in a tire circumferential direction, the pattern vibration sound being attributable to an impact applied when a tread on which lateral grooves are formed comes into contact with the road surface.

For reduction of the air column resonance sound, a method of forming a wide circumferential groove in a center portion of a tread has been heretofore known (Patent Document 1, for example).

In addition, for reduction of the pitch noise, a method of setting irregular circumferential lengths for blocks formed on a tread has been known (Patent Document 2, for example).

Patent Document 1: Japanese Unexamined Patent Application No. H6-143932 (FIGs.1 and 2)
Patent Document 2: Japanese Unexamined Patent Application No. H8-118917 (FIG. 1)

DISCLOSURE OF THE INVENTION

The conventional methods described above have the following problem. Specifically, the method of forming the wide circumferential groove in the center portion of the tread and the method of setting irregular circumferential lengths for blocks impair the degree of freedom in designing a tread pattern. If a tread pattern particularly designed for reducing the air column resonance sound or the pitch noise is adopted, other performances required for a tire, such as a performance on a wet road surface is sacrificed.

In view of the above, an object of the present invention is to provide a method of designing a tire and to provide the tire, by which tire noise can be effectively reduced while the degree of freedom in designing a tread pattern is secured.

The present invention has been made to advantageously solve the above-described problems. An object thereof the present invention is to provide a method of designing a tire including a block row (block row 40) which has a plurality of blocks (blocks 30) sectioned by circumferential grooves (circumferential grooves 10) and lateral grooves (lateral grooves 20), and which is formed along a tire circumferential direction, the method comprising the steps of: determining a resonance sound frequency f being a reference frequency of an air column resonance sound produced by the tire, on the basis of a ground contact length of the tire in a case where a standard internal pressure and a standard load are applied to the tire; determining the number of pitches of the block row; and determining a block row phase in a case where a band of a secondary pitch noise frequency fp2 falls within a range overlapping with a band of the resonance sound frequency f, the block row phase defined by intervals at which the plurality of blocks forming the block row are placed, the secondary pitch noise frequency fp2 being a secondary component of a reference frequency of pitch noise arising from the block row at a reference speed being a reference traveling speed of a vehicle equipped with the tire, wherein in the step of determining the block row phase, the block row phase is determined in such a manner that one part and the other part of the block row on both sides of a tire equator line (equator line CL) are out of phase from each other by 10% to 30%.

In this respect, the standard internal pressure is an air pressure corresponding to a maximum load capacity described in Year Book 2004 of JATMA (Japan Automobile Tire Manufacturers Association). The standard load is a load corresponding to a maximum load capacity in a case of applying a single tire described in Year Book 2004 of JATMA (Japan Automobile Tire Manufacturers Association). Outside Japan, the standard internal pressure is an air pressure corresponding to a maximum load (maximum load capacity) of a single tire described in the following standards. The standard load is a maximum load (maximum load capacity) of a single tire of an application size described in the following standard. Each of the standards is specified by an industrial standard which is effective in a region where tires are produced or used. For example, in the United States, the standard refers to Year Book of "The Tire and Rim Association Inc," and in Europe, the standard refers to "Standards Manual" of "The European Tire and Rim Technical Organization."

According to the above feature, the block row phase defined by intervals at which the multiple blocks forming the block row are placed is determined in such a manner that one part and the other part of the block row on both sides of the tire equator line are out of phase from each other by 10% to 30%, in a case where the band of the secondary pitch noise frequency fp2 being the secondary component of the reference frequency (Hz) of pitch noise arising from the block row falls within the range overlapping the band of the resonance sound frequency f.

This more likely reduces the noise level of the secondary pitch noise frequency fp2 as well as increases the noise level of a band of a primary pitch noise frequency fp1. Since the band of the primary pitch noise frequency fp1 does not overlap with the band of the resonance sound frequency f, tire noise (pitch noise and air column resonance sound) can be effectively reduced.

The above feature also eliminates the need for forming a wide circumferential groove in a center portion of a tread for the reduction of only the air column resonance sound or the need for setting irregular circumferential lengths for blocks for the reduction of only the pitch noise. For this reason, the degree of freedom in designing a tread pattern can be secured.

According to a second aspect of the present invention, there is provided a method of designing a tire according to claim 1, wherein the block row includes: a first block row formed innermost in a tread width direction; and a second block row formed on an outer side of the first block row in the tread width direction in a view of a tread surface of the tire, and in the step of determining the block row phase, a first block row phase defined by intervals at which the plurality of blocks forming the first block row are placed is determined in such a manner that one part and the other part of the first block row are out of phase from each other by 10% to 30%, and a second block row phase defined by intervals at which the plurality of blocks forming the second block row are placed is determined in such a manner that one part and the other part of the second block row are out of phase from each other by 10% to 30%.

According to a third aspect of the present invention, there is provided a method of designing a tire according to claim 2, wherein the block row further includes a third block row formed on an outer side of the second block row in the tread width direction in the view of the tread surface of the tire, and in the step of determining the block row phase, a third block row phase defined by intervals at which the plurality of blocks forming the third block row are placed is determined in such a manner that one part and the other part of the third block row are out of phase from each other by 10% to 30%.

According to a fourth aspect of the present invention, there is provided a method of designing a tire according to claim 2, wherein in the step of determining the block row phase, the first block row phase and the second block row phase are determined in such a manner as to be shifted from each other.

According to a fifth aspect of the present invention, there is provided a method of designing a tire according to claim 3, wherein in the step of determining the block row phase, the first block row phase, the second block row phase, and the third block row phase are determined in such a manner as to be shifted from one another.

According to a sixth aspect of the present invention, there is provided a method of designing a tire according to claim 1, wherein in the step of determining the block row phase, the block row phase is determined in a case where the band of the secondary pitch noise frequency fp2 at a traveling speed of 60 km/h of the vehicle falls within a range overlapping with the band of the resonance sound frequency f.

According to a seventh aspect of the present invention, there is provided a tire including a block row which has a plurality of blocks sectioned by circumferential grooves and lateral grooves, and which is formed along a tire circumferential direction, wherein the block row has the number of pitches of the block row with which a band of a secondary pitch noise frequency fp2 falls within a range overlapping with a band of a resonance sound frequency f, the secondary pitch noise frequency fp2 being a secondary component of a reference frequency of pitch noise arising from the block row at a traveling speed of 60 km/h of a vehicle, the resonance sound frequency f being a reference frequency of an air column resonance sound produced by the tire in a case where a standard load is applied to the tire, and in a block row phase defined by intervals at which the plurality of blocks forming the block row are placed, one part and the other part of the block row on both sides of a tire equator line are out of phase from each other by 10% to 30%.

According to a eighth aspect of the present invention, there is provided a tire according to claim 7, wherein the block row includes: a first block row formed innermost in a tread width direction; and a second block row formed on an outer side of the first block row in the tread width direction in a view of a tread surface of the tire, wherein a first block row phase defined by intervals at which the plurality of blocks forming the first block row are placed is determined in such a manner that one part and the other part of the first block row are out of phase from each other by 10% to 30%, and a second block row phase defined by intervals at which the plurality of blocks forming the second block row are placed is determined in such a manner that one part and the other part of the second block row are out of phase from each other by 10% to 30%.

According to a ninth aspect of the present invention, there is provided a tire according to claim 8, wherein the block row further includes a third block row formed on an outer side of the second block row in the tread width direction in the view of the tread surface of the tire, and a third block row phase defined by intervals at which the plurality of blocks forming the third block row are placed is determined in such a manner that one part and the other part of the third block row are out of phase from each other by 10% to 30%.

According to a tenth aspect of the present invention, there is provided a tire according to claim 8, wherein the first block row phase and the second block row phase are determined in such a manner as to be shifted from each other.

According to a eleventh aspect of the present invention, there is provided a tire according to claim 9, wherein the first block row phase, the second block row phase, and the third block row phase are determined in such a manner as to be shifted from one another.

According to the features of the present invention, it is possible to provide a method of designing a tire and to provide the tire, by which tire noise can be effectively reduced while the degree of freedom in designing a tread pattern is secured.

[FIG. 1] FIG. 1 is a developed view illustrating a tread pattern of a pneumatic tire 1 according to an embodiment (Example 1).

[FIG. 2] FIG. 2 is a flowchart illustrating a method of designing a tire according to the embodiment.

[FIG. 3] FIG. 3 is a graph illustrating a resonance sound frequency and a pitch noise frequency according to the embodiment.

[FIG. 4] FIG. 4 is a graph illustrating a resonance sound frequency and a pitch noise frequency according to Comparative Example.

[FIG. 5] FIG. 5 is a developed view illustrating a tread pattern of a pneumatic tire 100A according to Comparative Example 1.

[FIG. 6] FIG. 6 is a developed view illustrating a tread pattern of a pneumatic tire 100B according to Comparative Example 2.

Embodiments of a method of designing a tire and the tire (pneumatic tire) according to the present invention will be described next by referring to the drawings. Specifically, the description will be given of (1) Configuration of Pneumatic Tire, (2) Method of Designing Tire, (3) Advantageous Effects, (4) Comparative Assessment, and (5) Other Embodiments.

Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

(1) Configuration of Pneumatic Tire

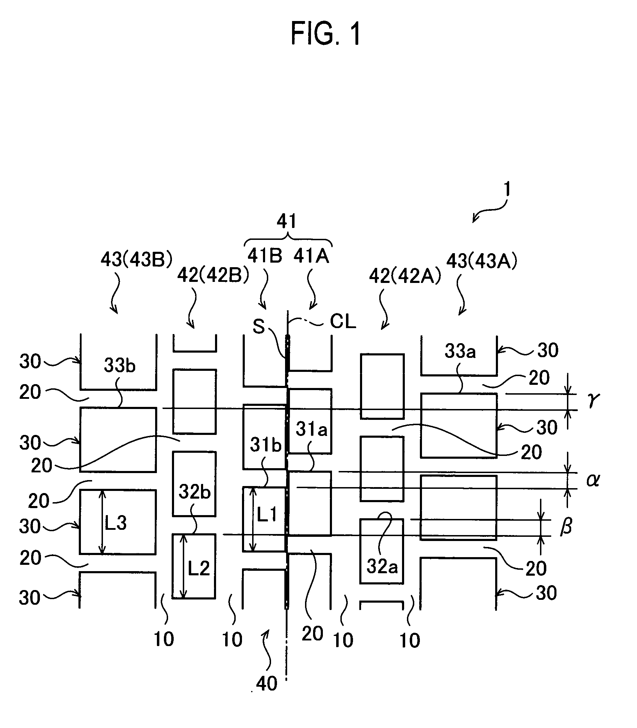

First, a configuration of a pneumatic tire 1 according to an embodiment will be described by referring to a drawing. FIG. 1 is a developed view (view of tread surface) illustrating a tread pattern of the pneumatic tire 1 according to the embodiment. Note that the pneumatic tire 1 according to the embodiment is a general heavy-duty tire including bead portions, a carcass layer, and a belt layer (not illustrated).

As shown in FIG. 1, the pneumatic tire 1 includes a block row 40 having multiple blocks 30 sectioned by circumferential grooves 10 and lateral grooves 20. The block row 40 is formed along a tire circumferential direction.

Specifically, the block rows 40 include center block rows 41 (first block rows), middle block rows 42 (second block rows), and end block rows 43 (third block rows). The center block rows 41 are formed innermost in a tread width direction (i.e., in a region including a tire equator line CL of the pneumatic tire 1) and are formed to be separated from each other on both sides of the tire equator line CL. The middle block rows 42 are each formed on the outer side of the center block row 41 in the tread width direction in a view of a tread surface of the pneumatic tire 1, while the end block row 43 is formed on the outer side of the middle block row 42 in the tread width direction in the view of the tread surface of the pneumatic tire 1.

The center block row 41 has the number of pitches of the center block row 41 with which a band of a secondary pitch noise frequency fp2 falls within a range overlapping with a band of a resonance sound frequency f, the secondary pitch noise frequency fp2 being a secondary component of a reference frequency of pitch noise arising from the center block row 41, the resonance sound frequency f being a reference frequency of an air column resonance sound produced by the pneumatic tire 1 in a case where a standard load is applied to the pneumatic tire 1. Note that the secondary pitch noise frequency fp2 and the resonance sound frequency f will be described in detail later.

The center block row 41 includes a sipe S formed therein and extending in a tire circumferential direction, and is divided in the tread width direction by the sipe S. In other words, the center block row 41 includes: a center block row 41 A located on one side (right side in FIG. 1) of the tire equator line CL; and a center block row 41B located on the other side (left side in FIG. 1) of the tire equator line CL.

In a center block row phase (first block row phase) defined by intervals at which multiple blocks 30 forming the center block row 41 are placed, one part and the other part of the center block row 41 (i.e., center block row 41A and center block row 41B) are out of phase from each other by 10% to 30% of a length L1 of each block 30 in the tire circumferential direction.

In this respect, "shifted in block row phase" denotes a situation where start points, in the tire circumferential direction, of repetitive patterns of blocks 30 are shifted from each other in the tire circumferential direction. In the embodiment, an end of each block 30 in the tire circumferential direction is used as the start point of the repetitive pattern of the block 30. Note that, even if a block 30 is in a form other than a quadrangle as shown in FIG. 1, an end of the block 30 in the tire circumferential direction is used as the start point of the repetitive pattern of the block 30.

For example, an end 31 a, in the tire circumferential direction, of one of the blocks 30 in the center block row 41A is shifted by $\alpha$ (25%) from an end 31b, in the tire circumferential direction, of a corresponding one of the blocks 30 in the center block row 41B.

Likewise, the middle block row 42 has the number of pitches of the middle block row 42 with which a band of a secondary pitch noise frequency fp2 falls within a range overlapping with a band of a resonance sound frequency f, the secondary pitch noise frequency fp2 being a secondary component of a reference frequency of pitch noise arising from the middle block row 42, the resonance sound frequency f being a reference frequency of an air column resonance sound produced by the pneumatic tire 1 in a case where the standard load is applied to the pneumatic tire 1.

The middle block row 42 includes: a middle block row 42A located on one side (right side in FIG. 1) of the tire equator line CL; and a middle block row 42B located on the other side (left side in FIG. 1) of the tire equator line CL.

In a middle block row phase (second block row phase) defined by intervals at which multiple blocks 30 forming the middle block row 42 are placed, one part and the other part of the middle block row 42 (middle block row 42A and middle block row 42B) are out of phase from each other by 10% to 30% of a length L2 in the tire circumferential direction of the middle block row 42. Note that the middle block row phase is shifted from the center block row phase mentioned above.

For example, an end 32a, in the tire circumferential direction, of one of the blocks 30 in the middle block row 42A is shifted by $\beta$ (25%) from an end 32b, in the tire circumferential direction, of a corresponding one of the blocks 30 in the middle block row 42B.

Likewise, the end block row 43 has the number of pitches of the end block row 43 with which a band of a secondary pitch noise frequency fp2 falls within a range overlapping with a band of a resonance sound frequency f, the secondary pitch noise frequency fp2 being a secondary component of a reference frequency of pitch noise arising from the end block row 43, the resonance sound frequency f being a reference frequency of an air column resonance sound produced by the pneumatic tire 1 in a case where the standard load is applied to the pneumatic tire 1.

The end block row 43 includes: an end block row 43A located on one side (right side in FIG. 1) of the tire equator line CL; and an end block row 43B located on the other side (left side in FIG. 1) of the tire equator line CL.

In an end block row phase (third block row phase) defined by intervals at which multiple blocks 30 forming the end block row 43 are placed, one part and the other part of the end block row 43 (end block row 43A and end block row 43B) are out of phase from each other by 10% to 30% of a length L3 in the tire circumferential direction of the end block row 43. Note that the end block row phase is shifted from the center block row phase and the middle block row phase mentioned above.

For example, an end 33a, in the tire circumferential direction, of one of the blocks 30 in the end block row 43A is shifted by $\gamma$ (25%) from an end 33b, in the tire circumferential direction, of a corresponding one of the blocks.

(2) Method of Designing Tire

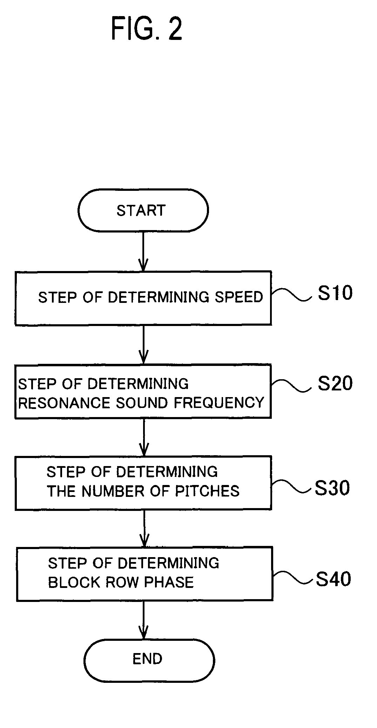

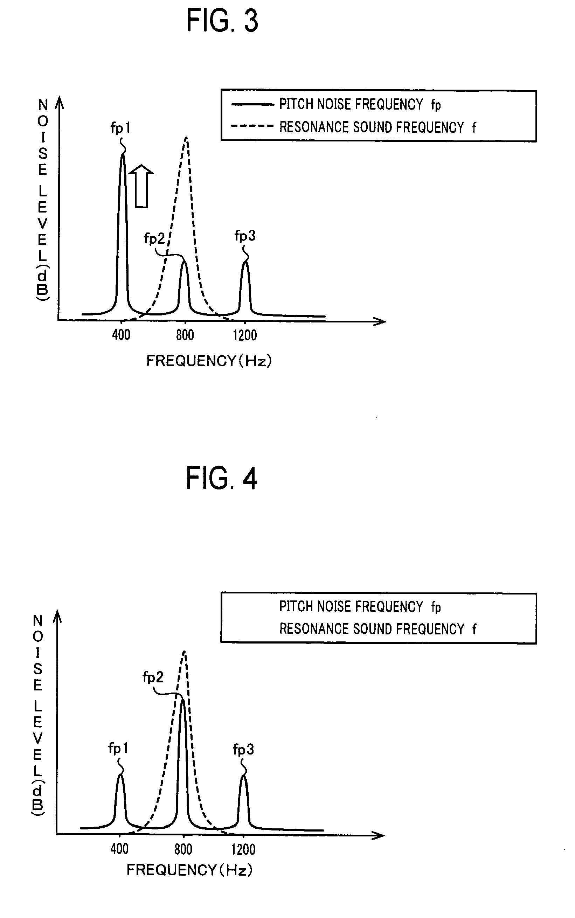

A method of designing a tire according to the embodiment will be described next by referring to the drawings. FIG. 2 is a flowchart illustrating the method of designing a tire according to the embodiment. FIG. 3 is a graph illustrating a resonance sound frequency and a pitch noise frequency according to the embodiment.

As shown in FIG. 2, the method of designing a tire includes a step of determining speed, a step of determining resonance sound frequency, a step of determining the number of pitches, and a step of determining phase.

(2-1) Step of Determining Speed

In the step of determining speed in Step 10, a reference speed v (km/h) is determined which is a reference traveling speed of a vehicle equipped with the pneumatic tire 1.

The reference speed v denotes an average speed (i.e., average rolling speed) or the like in a long distance travel in which road noise is likely to become a problem. A speed, such as a legal speed or a speed limit at an expressway is adopted as the reference speed v in some cases. For example, a speed of 60 to 80 km/h can be adopted as the reference speed v of a vehicle equipped with a heavy-duty tire.

(2-2) Step of Determining Resonance Sound Frequency

In the step of determining resonance sound frequency in Step 20, a resonance sound frequency f (Hz) which is a reference frequency of an air column resonance produced by the pneumatic tire 1 is determined on the basis of a ground contact length 1 of the pneumatic tire 1, the ground contact length 1 obtained in a case where the standard internal pressure and the standard load are applied to the pneumatic tire 1.

The resonance sound frequency f satisfies the relationship of the following equation where '1' denotes the ground contact length (m) of the pneumatic tire 1 and 'c' denotes the sound speed (m/s).

[Formula 1]

$$f = \frac{c}{2l}$$

Note that the ground contact length 1 of the pneumatic tire 1 denotes the average length of the circumferential grooves 10 of the pneumatic tire 1, the circumferential grooves 10 coming into contact with the road surface. It is preferable in terms of calculation to adopt as the ground contact length 1 the average length of circumferential grooves 10 adjacent to the block row 40. However, there are some cases where the average length of all the circumferential grooves 10 is adopted or where the average length of all the ground contact surfaces in the tire circumferential direction is adopted. The sound speed c denotes the speed of sound transmitted through a substance (medium).

The resonance sound frequency f remains almost invariant irrespective of the reference speed v of the pneumatic tire 1. For example, in a case where the ground contact length 1 of the pneumatic tire 1 is 0.213 m and the sound speed c is 340 m/s, the resonance sound frequency f is 340 / (2 × 0.213) = 800 Hz. As shown in FIG. 3, the resonance sound frequency f is generally in a band around 800 Hz.

(2-3) Step of Determining the Number of Pitches

In the step of determining the number of pitches in Step 30, the number of pitches of the block row 40 is determined. For example, the number of pitches of the block row 40 is determined according to the length of the pneumatic tire 1 in the tire circumferential direction.

(2-4) Step of Determining Phase

In the step of determining phase in Step 40, a block row phase defined by intervals at which the multiple blocks 30 forming a block row 40 are placed is determined in a case where the band of the secondary pitch noise frequency fp2 (Hz) falls within a range overlapping with the band of the resonance sound frequency f, the secondary pitch noise frequency fp2 being the secondary component of the reference frequency (Hz) of pitch noise arising from the block row 40 at a reference speed v (e.g., vehicle traveling speed of 60 km/h).

Here, a vehicle traveling speed of 60 km/h is the maximum speed for the vehicle traveling on an ordinary road, and is in a speed range which is used most frequently in practice. For this reason, if the most effect of reducing tire noise is exerted at a vehicle traveling speed of 60 km/h, the tire noise during normal traveling can be reduced preferably.

Specifically, a block row phase is determined in a case where each of the following bands falls within a range overlapping with the band of the resonance sound frequency f, the bands including: the band of the secondary pitch noise frequency fp2 (Hz) of pitch noise arising from the center block row 41; the band of the secondary pitch noise frequency fp2 (Hz) of pitch noise arising from the middle block row 42; and the band of the secondary pitch noise frequency fp2 (Hz) of pitch noise arising from the end block row 43.

Here, the range in which the band of the secondary pitch noise frequency fp2 (Hz) overlaps with the band of the resonance sound frequency f is within ± 15% of the band of the resonance sound frequency f by using the resonance sound frequency f of the maximum noise level as a reference. It should be noted that if the overlapping range is larger than ± 15%, an effect of reducing the noise level of the secondary pitch noise frequency fp2 in the block row 40 cannot be exerted fully even with the shift of the block row phase by a given range.

Meanwhile, the reference frequency fp of pitch noise varies depending on the reference speed v. The reference frequency fp of pitch noise includes at least a primary pitch noise frequency fp1 being a primary component, a secondary pitch noise frequency fp2 being a secondary component, and a tertiary pitch noise frequency fp3 being a tertiary component.

The reference frequency fp of pitch noise satisfies the relationship in the following equation where 'v' denotes the reference speed (km/h), 'p' denotes the number of pitches (pitches/round), 'r' denotes the radius (m) under heavy duty, and 'n' denotes the order of pitch sound.

[Formula 2]

$$fp = \frac{vp}{3.6 \times 2\pi r} \times n$$

Here, the radius under heavy-duty r denotes an effective radius of the pneumatic tire 1 in terms of an actual travel amount, and is obtained by dividing the wheel travel distance for one round by $2\pi$.

Meanwhile, the block row phase denotes a state where the multiple blocks 30 forming a block row 40 are placed at constant intervals. The block row phase includes the center block row phase, the middle block row phase, and the end block row phase. The center block row phase is defined by intervals at which the multiple blocks 30 forming the center block row 41 are placed, the middle block row phase is defined by intervals at which the multiple blocks 30 forming the middle block row 42 are placed, and the end block row phase is defined by intervals at which the multiple blocks 30 forming the end block row 43 are placed.

In Step 40, the block row phase is determined in such a manner that one part and the other part of a block row 40 on both sides of the tire equator line CL are out of phase from each other by 10% to 30%.

To sum, in the center block row phase, one part and the other part of the center block row 41 are out of phase from each other by 10% to 30%. Specifically, the end 31a, in the tire circumferential direction, of one of the blocks 30 in the center block row 41A is shifted by $\alpha$ (25%) from the end 31b, in the tire circumferential direction, of a corresponding one of the blocks 30 in the center block row 41 B, as described above.

In the middle block row phase, one part and the other part of the middle block row 42 are out of phase from each other by 10% to 30%. Specifically, the end 31 a, in the tire circumferential direction, of one of the blocks 30 in the middle block row 42A is shifted by $\beta$ (25%) from the end 31b, in the tire circumferential direction, of a corresponding one of the blocks 30 in the middle block row 42B, as described above.

In the end block row phase, one part and the other part of the end block row 43 are out of phase from each other by 10% to 30%. Specifically, the end 31 a, in the tire circumferential direction, of one of the blocks 30 in the end block row 43A is shifted by $\beta$ (25%) from the end 31b, in the tire circumferential direction, of a corresponding one of the blocks 30 in the end block row 43B, as described above.

Note that the center block row phase, the middle block row phase, and the end block row phase are determined in such a manner as to be shifted from one another.

(3) Advantageous Effects

An object of the method of designing a tire according to the afore-mentioned embodiment is to design the pneumatic tire 1 which effectively reduces tire noise. The tire noise is noise occurring when the pneumatic tire 1 rolls on the road surface.

Causes of the tire noise include the air column resonance sound and the pattern vibration sound (pitch noise), the air column resonance sound arising from an air column formed by the road surface and the circumferential groove 10, such as a main groove, extending in the tire circumferential direction, the pattern vibration sound being attributable to an impact applied when a tread on which the lateral grooves 20 are formed comes into contact with the road surface.

It is difficult to control the resonance sound frequency f, because the resonance sound frequency f being the reference frequency of air column resonance sound is determined by the ground contact length 1 of the pneumatic tire 1 and the sound speed c. Meanwhile, the pitch noise frequency fp being the reference frequency of pitch noise is determined by the number of pitches of the block row 40.

Here, consider a case, for example, where in the center block row 41, one part and the other part of the center block row 41 on both sides of the tire equator line CL are shifted from each other by 50% (1/2) in terms of the blow row phase. In this case, the secondary pitch noise frequency fp2 increases as shown in Fig. 4, since the one part and the other part of the center block row 41 alternately come into contact with the ground. On the other hand, the primary pitch noise frequency fp1 increases excessively in a case where one part and the other part of a block row 40 on both sides of the tire equator line CL are shifted from each other by a percent close to 0% in terms of the block row phase.

In the afore-mentioned case where one part and the other part of the block row 40 on both sides of the tire equator line CL are shifted from each other by 50% (1/2) in terms of the block row phase, the band of the secondary pitch noise frequency fp2 in the block row 40 and having a higher noise level overlaps with the band of the resonance sound frequency f. For this reason, the tire noise (pitch noise and air column resonance sound overlapping with each other) cannot be reduced effectively.

On the other hand, consider a case of the embodiment, for example, where in the center block row 41, one part and the other part of the center block row 41 on both sides of the tire equator line CL are out of phase from each other by 25% (1/4). As shown in Fig. 3, there is a tendency in this case that the noise level of the secondary pitch noise frequency fp2 in the center block row 41 decreases and the band of the primary pitch noise frequency fp1 increases. Since the band of the primary pitch noise frequency fp1 in the center block row 41 does not overlap with the band of the resonance sound frequency f, the tire noise (pitch noise and air column resonance sound) can be reduced effectively. Note that the same as the center block row 41 applies to the middle block row 42 and the end block row 43.

In the embodiment, in the block row phrase, one part and the other part of a block row 40 on both sides of the tire equator line CL are out of phase from each other by 10% to 30% as described above. Thus, the noise level of the secondary pitch noise frequency fp2 in the block row 40 decreases and also the band of the primary pitch noise frequency fp1 does not overlap with the band of the resonance sound frequency f. Accordingly, the tire noise (pitch noise and air column resonance sound) can be reduced effectively.

Shift in block row phase by less than 10% increases the primary pitch noise frequency fp1 excessively. On the other hand, shift in block row phase by more than 30% results in a situation where the bands of the secondary pitch noise frequency fp2 and the resonance sound frequency f can not sufficiently prevent from overlapping with each other.

In addition, the embodiment eliminates the need for forming a wide circumferential groove 10 in a center portion of a tread for reduction of only the air column resonance sound or the need for setting irregular circumferential lengths for blocks 30 for reduction of only the pitch noise. The embodiment thus enables the securing of the degree of freedom in designing a tread pattern.

The embodiment can reduce the tire noise (pitch noise and air column resonance sound) further effectively while securing the braking performance (e.g., traction performance) on a wet road surface without the reduction of the number of pitches of the center block row 41, by determining the center block row phase, the middle block row phase, and the end block row phase in such a manner that the phases are shifted from one another.

(4) Comparative Assessment

For further clarification of the effects of the present invention, description will be given next of the results of a test conducted by using pneumatic tires according to Comparative Examples 1 and 2 and Example given below. Specifically, the description will be given of (4-1) Configuration of Each Pneumatic Tire and (4-2) Results of Assessment. Note that the present invention is not limited by these examples at all.

(4-1) Configuration of Each Pneumatic Tire

Firstly, by referring to the drawings and Table 1, the configuration of pneumatic tires according to Comparative Examples 1 and 2 and Example will be described briefly.

[Table 1]

| | Resonance Sound Frequency | Comparative Example 1 | Comparative Example 2 | Example |
|---|---|---|---|---|
| Number of Pitches (fp) | 680 Hz | 63 pitches/1 round (660 Hz) | 53 pitches/1 round (554 Hz) | 63 pitches/1 round (660 Hz) |

Here, the resonance sound frequency f was adjusted in such a manner that all the block rows in the block row 40 have the same resonance sound frequency f, by adjusting a variation in rubber gauge of each pneumatic tire attributable to the ground contact length 1.

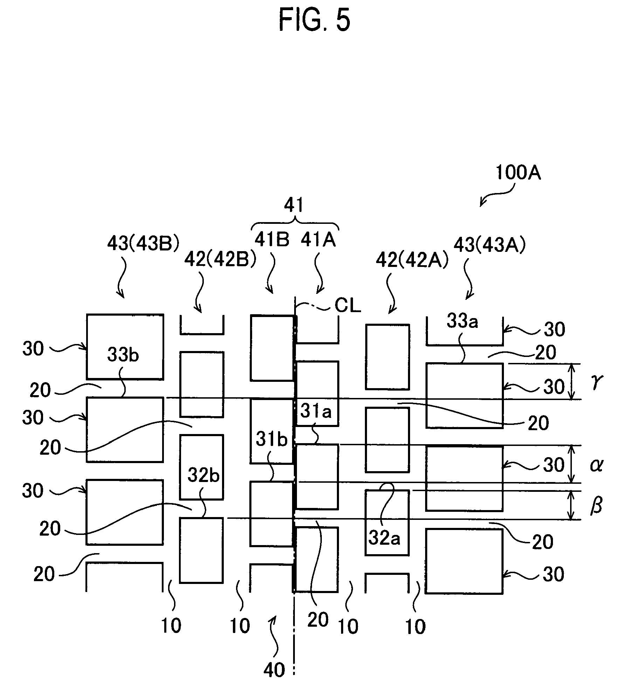

As shown in FIG. 5 and Table 1, in a pneumatic tire 100A according to Comparative Example 1, the number of pitches of a block row 40 (center block row 41, middle block row 42, and end block row 43) is 63 pitches for 1 round. One part and the other part of the block row are shifted from each other by 50% (1/2) in terms of the block row phase (center block row phase, middle block row phase, and end block row phase).

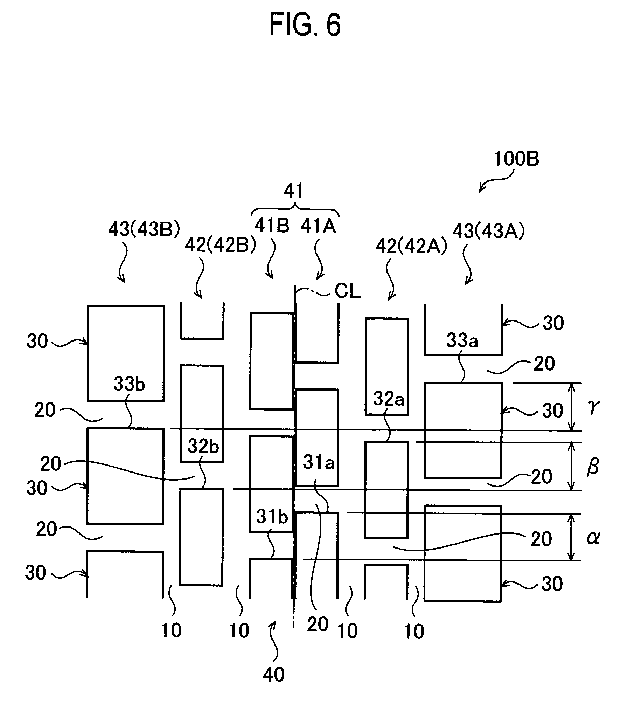

As shown in FIG. 6 and Table 1, in a pneumatic tire 100B according to Comparative Example 2, the number of pitches of a block row 40 (center block row 41, middle block row 42, and end block row 43) is 53 pitches for 1 round. One part and the other part of the block row are from each other by 50% (1/2) in terms of the blow row phase (center block row phase, middle block row phase, and end block row phase).

As shown in Table 1, in the pneumatic tire according to Example (a pneumatic tire having the same pattern as that on the pneumatic tire 1 shown in FIG. 1), the number of pitches of a block row 40 (center block row 41, middle block row 42, and end block row 43) is 63 pitches for 1 round. One part and the other part of the block row the other part of the block row are from each other by 25% (1/4) in terms of the blow row phase (center block row phase, middle block row phase, and end block row phase).

(4-2) Results of Assessment

The Results of assessment by using the pneumatic tires described above will be described next by referring to Table 2. Specifically, the description will be given of (4-2A) Noise Performance, (4-2B) Traction Performance on Wet Road Surface, and (4-2C) Overall Assessment. Data on each pneumatic tire include the following conditions.
- Tire Size: 11R22.5
- Rim Width: 7.50 inches
- Internal Pressure Condition: 900 kPa

[Table 2]

|  | Comparative Example 1 | Comparative Example 2 | Example |
|---|---|---|---|
| Noise Performance | 82 | 76 | 77 |
| Traction Performance on Wet Road Surface | 100 | 85 | 100 |

(4-2A) Noise Performance

The noise performance was assessed by applying a load of 2500 kg to each pneumatic tire which was mounted on a test drum, placing the pneumatic tire on a mount used as a road surface, and then rolling the pneumatic tire at a speed of 60 km/h. The indices of the noise performance shown in Table 2 indicate the noise of the pneumatic tires at the peak (630 Hz). Here, a smaller index represents a better noise performance.

As shown in Table 2, it was found that the pneumatic tire according to Example 1 was better in the noise performance than the pneumatic tire 100A according to Comparative Example 1.

(4-2B) Traction Performance on Wet Road Surface

The traction performance on a wet road surface was assessed by causing a vehicle (trailer) equipped with each pneumatic tire to run around a test course on an iron plate used as the wet road surface. For the traction performance on the wet road surface, the time required for the vehicle to travel by a distance of 0 to 15 m was measured while the vehicle was accelerated from an idling state (5 km/h) to the third gear state with the engine speed kept at 2000 rpm. For the indices for the traction performance on the wet road surface shown in Table 2, values obtained by converting acceleration of the pneumatic tires according to Comparative Example 2 and Example are shown while using, as '100', a value obtained by converting acceleration of the pneumatic tire 100A according to Comparative Example 1. Here, a greater index represents a better traction performance on the wet road surface.

As shown in Table 2, it was found that the pneumatic tire according to Example 1 was better in the traction performance on the wet road surface than the pneumatic tire 100B according to Comparative Example 2.

(4-2C) Overall Assessment

As having a larger number of pitches than the pneumatic tire 100B according to Comparative Example 2, the pneumatic tire 100A according to Comparative Example 1 is better in the traction performance on the wet road surface. The pneumatic tire 100A according to Comparative Example 1, however, is high in the noise level of the secondary pitch noise frequency fp2 which overlaps with the band of the resonance sound frequency f. For this reason, the pneumatic tire 100A according to Comparative Example 1 cannot have compatibility between the noise performance and the traction performance on the wet road surface.

The pneumatic tire 100B according to Comparative Example 2 is better in noise performance since the band of the secondary pitch noise frequency fp2 is shifted from the band of the resonance sound frequency f. However, as having a fewer number of pitches than the pneumatic tire 100A according to Comparative Example 1, the pneumatic tire 100B according to Comparative Example 2 is lower in the traction performance on the wet road surface. For this reason, the pneumatic tire 100B according to Comparative Example 2 cannot have compatibility between the noise performance and the traction performance on the wet road surface.

In contrast, as having a larger number of pitches than the pneumatic tire 100B according to Comparative Example 2, the pneumatic tire according to Example is better in the traction performance on the wet road surface. In addition, the pneumatic tire according to Example is low in the noise level of the secondary pitch noise frequency fp2 which overlaps with the band of the resonance sound frequency f. For this reason, the pneumatic tire 1 according to Example can have compatibility between the noise performance and the traction performance on the wet road surface.

(5) Other Embodiments

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

The embodiment of the present invention can be modified as follows, for example. The block row 40 has been hereinabove described as including the center block row 41, the middle bock row 42, and the end block row 43, but is not limited thereto. It is only necessary for the block row 40 to include at least the center block row 41 and a block row formed on outer sides (both sides) of the center block row 41 in the tread width direction.

In other words, the center block row phase, the middle block row phase, and the end block row phase have been hereinabove described as being shifted from one another, but are not limited thereto. It is only necessary for at least the center block row phase and the middle block row phase to be shifted from each other.

The center block row 41 has been hereinabove described as being formed by providing parts, which are separated from each other, on both sides of the tire equator line CL, but is not limited thereto. One part of the center block row 41 on one side of the tire equator line CL and the other part of the center block row 41 on the other side of the tire equator line CL may be formed as a single unit.

The pneumatic tire 1 has been hereinabove described as being a general heavy-duty tire including bead portions, a carcass layer, and a belt layer (not illustrated). The pneumatic tire 1, however, is not limited thereto and may be a tire for a passenger vehicle or the like. Note that the tire is not limited to a pneumatic tire which can be filled with air. It is a matter of course that the tire may be a tire which can be filled with a fluid other than the air (e.g., nitrogen only), may be a solid tire (airless tire) which needs no fluid therein, or may be tires of other types.

The method of designing a tire has been hereinabove described as including the step of determining speed, the step of determining resonance sound frequency, and the step of determining the number of pitches. The method, however, is not limited thereto, and do not have to include the step of determining speed. It is a matter of course that the reference speed v (km/h) can be selected appropriately for each purpose in this case.

As described above, the present invention naturally includes various embodiments which are not described herein. Accordingly, the technical scope of the present invention should be determined only by the matters to define the invention in the scope of claims regarded as appropriate based on the description.

It is to be noted that the entire contents of Japanese Patent Application No. 2008-239936 (filed on September 18, 2008) are incorporated herein by reference.

Industrial Applicability

As has been described, the method of designing a tire and the tire according to the present invention enable effective reduction of the tire noise while securing the degree of freedom in designing a tread pattern, and therefore are useful in a technique of designing a tire, a technique of producing a tire, and other techniques.

**Claims**

1. A method of designing a tire including a block row which has a plurality of blocks sectioned by circumferential grooves and lateral grooves, and which is formed along a tire circumferential direction, the method comprising the steps of:

   determining a resonance sound frequency f being a reference frequency of an air column resonance sound produced by the tire, on the basis of a ground contact length of the tire in a case where a standard internal pressure and a standard load are applied to the tire;
   determining the number of pitches of the block row; and
   determining a block row phase in a case where a band of a secondary pitch noise frequency fp2 falls within a range overlapping with a band of the resonance sound frequency f, the block row phase defined by intervals at which the plurality of blocks forming the block row are placed, the secondary pitch noise frequency fp2 being a secondary component of a reference frequency of pitch noise arising from the block row at a reference speed being a reference traveling speed of a vehicle equipped with the tire, wherein
   in the step of determining the block row phase, the block row phase is determined in such a manner that one part and the other part of the block row on both sides of a tire equator line are out of phase from each other by 10% to 30%.

2. The method of designing a tire according to claim 1, wherein
   the block row includes:

   a first block row formed innermost in a tread width direction; and
   a second block row formed on an outer side of the first block row in the tread width direction in a view of a tread surface of the tire, and

   in the step of determining the block row phase,
   a first block row phase defined by intervals at which the plurality of blocks forming the first block row are placed is determined in such a manner that one part and the other part of the first block row are out of phase from each other by 10% to 30%, and
   a second block row phase defined by intervals at which the plurality of blocks forming the second block row are placed is determined in such a manner that one part and the other part of the second block row are out of phase from each other by 10% to 30%.

3. The method of designing a tire according to claim 2, wherein
   the block row further includes a third block row formed on an outer side of the second block row in the tread width direction in the view of the tread surface of the tire, and
   in the step of determining the block row phase, a third block row phase defined by intervals at which the plurality of blocks forming the third block row are placed is determined in such a manner that one part and the other part of the third block row are out of phase from each other by 10% to 30%.

4. The method of designing a tire according to claim 2, wherein in the step of determining the block row phase, the first block row phase and the second block row phase are determined in such a manner as to be shifted from each other.

5. The method of designing a tire according to claim 3, wherein in the step of determining the block row phase, the first block row phase, the second block row phase, and the third block row phase are determined in such a manner as to be shifted from one another.

6. The method of designing a tire according to claim 1, wherein in the step of determining the block row phase, the block row phase is determined in a case where the band of the secondary pitch noise frequency fp2 at a traveling speed of 60 km/h of the vehicle falls within a range overlapping with the band of the resonance sound frequency f.

7. A tire including a block row which has a plurality of blocks sectioned by circumferential grooves and lateral grooves, and which is formed along a tire circumferential direction, wherein
the block row has the number of pitches of the block row with which a band of a secondary pitch noise frequency fp2 falls within a range overlapping with a band of a resonance sound frequency f, the secondary pitch noise frequency fp2 being a secondary component of a reference frequency of pitch noise arising from the block row at a traveling speed of 60 km/h of a vehicle, the resonance sound frequency f being a reference frequency of an air column resonance sound produced by the tire in a case where a standard load is applied to the tire, and
in a block row phase defined by intervals at which the plurality of blocks forming the block row are placed, one part and the other part of the block row on both sides of a tire equator line are out of phase from each other by 10% to 30%.

8. The tire according to claim 7, wherein
the block row includes:

a first block row formed innermost in a tread width direction; and
a second block row formed on an outer side of the first block row in the tread width direction in a view of a tread surface of the tire, wherein

a first block row phase defined by intervals at which the plurality of blocks forming the first block row are placed is determined in such a manner that one part and the other part of the first block row are out of phase from each other by 10% to 30%, and
a second block row phase defined by intervals at which the plurality of blocks forming the second block row are placed is determined in such a manner that one part and the other part of the second block row are out of phase from each other by 10% to 30%.

9. The tire according to claim 8, wherein
the block row further includes a third block row formed on an outer side of the second block row in the tread width direction in the view of the tread surface of the tire, and
a third block row phase defined by intervals at which the plurality of blocks forming the third block row are placed is determined in such a manner that one part and the other part of the third block row are out of phase from each other by 10% to 30%.

10. The tire according to claim 8, wherein the first block row phase and the second block row phase are determined in such a manner as to be shifted from each other.

11. The tire according to claim 9, wherein the first block row phase, the second block row phase, and the third block row phase are determined in such a manner as to be shifted from one another.

# FIG. 1

# FIG. 2

```
        ┌─────────────┐
        │    START    │
        └─────────────┘
               │
               ▼
  ┌─────────────────────────────┐
  │ STEP OF DETERMINING SPEED   │ ～ S10
  └─────────────────────────────┘
               │
               ▼
  ┌─────────────────────────────┐
  │ STEP OF DETERMINING         │ ～ S20
  │ RESONANCE SOUND FREQUENCY   │
  └─────────────────────────────┘
               │
               ▼
  ┌─────────────────────────────┐
  │ STEP OF DETERMINING         │ ～ S30
  │ THE NUMBER OF PITCHES       │
  └─────────────────────────────┘
               │
               ▼
  ┌─────────────────────────────┐
  │ STEP OF DETERMINING         │ ～ S40
  │ BLOCK ROW PHASE             │
  └─────────────────────────────┘
               │
               ▼
        ┌─────────────┐
        │     END     │
        └─────────────┘
```

# FIG. 3

| | |
|---|---|
| —— | PITCH NOISE FREQUENCY fp |
| ---- | RESONANCE SOUND FREQUENCY f |

NOISE LEVEL (dB)

fp1

fp2

fp3

400    800    1200

FREQUENCY (Hz)

# FIG. 4

| |
|---|
| PITCH NOISE FREQUENCY fp |
| RESONANCE SOUND FREQUENCY f |

NOISE LEVEL (dB)

fp2

fp1

fp3

400    800    1200

FREQUENCY (Hz)

# FIG. 5

# FIG. 6

<table>
<tr><td colspan="2" align="center">**INTERNATIONAL SEARCH REPORT**</td><td>International application No.<br>PCT/JP2009/066130</td></tr>
</table>

| A. CLASSIFICATION OF SUBJECT MATTER |
|---|
| *B60C19/00*(2006.01)i, *B60C11/03*(2006.01)i |

According to International Patent Classification (IPC) or to both national classification and IPC

| B. FIELDS SEARCHED |
|---|

Minimum documentation searched (classification system followed by classification symbols)
B60C19/00, B60C11/03

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 63-141805 A (Sumitomo Rubber Industries, Ltd.), 14 June 1988 (14.06.1988), entire text (Family: none) | 1-11 |
| A | JP 2000-052714 A (Toyo Tire and Rubber Co., Ltd.), 22 February 2000 (22.02.2000), entire text (Family: none) | 1-11 |
| A | JP 2000-168312 A (Sumitomo Rubber Industries, Ltd.), 20 June 2000 (20.06.2000), entire text & US 6352091 B1    & EP 1008465 A2 | 1-11 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 December, 2009 (02.12.09) | 15 December, 2009 (15.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/066130

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 8-300908 A (Bridgestone Corp.),<br>19 November 1996 (19.11.1996),<br>entire text<br>(Family: none) | 1-11 |
| A | JP 2007-118704 A (Bridgestone Corp.),<br>17 May 2007 (17.05.2007),<br>entire text<br>(Family: none) | 1-11 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H6143932 B
- JP H8118917 B
- JP 2008239936 A